# EUROPEAN PATENT SPECIFICATION

(11) **EP 1 547 837 B1**
(45) Date of publication and mention of the grant of the patent: **09.11.2011**
(21) Application number: 03104880.4
(22) Date of filing: 22.12.2003
(51) Int. Cl.: B60J 7/047, B60J 7/043, B60J 7/02

(54) **Open roof construction for a vehicle**
Öffnungsfähige Dachkonstruktion für ein Fahrzeug
Construction de toit ouvrant pour un véhicule

(43) Date of publication of application: 29.06.2005
(73) Proprietor: Inalfa Roof Systems Group B.V., 5804 AH Venray (NL)
(72) Inventor: Feijts, Pascal Jozef Maria, 6042 JD Roermond (NL)
(74) Representative: Voncken, Bartholomeus Maria Ch.

(56) References cited:
- DE-A- 19 914 427
- FR-A- 1 503 928
- FR-A- 2 384 640
- US-A- 5 114 208
- US-A1- 2002 158 491
- PATENT ABSTRACTS OF JAPAN vol. 0102, no. 38 (M-508), 16 August 1986 (1986-08-16) -& JP 61 071217 A (AICHI MACH IND CO LTD; others: 01), 12 April 1986 (1986-04-12)

## Description

The invention relates to an open roof construction as defined in the preamble of claim 1 and as known from FR-A-2.384.640.

In an open roof construction of the type referred to above, the cooperation between the guides and guide members defines the vertical position of the roof panel when it moves for opening or closing the roof opening. Although this constructional concept has proven to be effective in many open roof constructions known today, its application is difficult in certain instances. When, for example, the roof of the vehicle is strongly curved, and when the roof panel in its open position is stacked above (or below) the stationary roof of the vehicle, the stacking height will increase, thus calling for steep guide sections for realising the proper position of the roof panel. Because of such steep sections of the guides large forces will be generated acting on a drive mechanism for the movable roof panel.

In view of the above it is an object of the present invention to provide an open roof construction of the type referred to above which does not suffer from the above disadvantage.

Thus, in accordance with the present invention there is provided an open roof construction for a vehicle, comprising a movable roof panel for opening and closing a roof opening provided in a stationary roof part of said vehicle, wherein at two opposite sides of said roof opening guides are provided in which guide members are slidable linking the roof panel to the guides, characterized in that at least part of each guide is movable in a direction substantially perpendicular to the roof panel.

Because at least part of each guide is movable in a direction substantially perpendicular to the roof panel, the roof panel can be positioned above the stationary roof without the loss of space within the vehicle. When the roof panel is in its position for fully closing the roof opening, there will be no guide sections projecting above the outer contour of the stationary roof, such that said outer contour will be completely smooth.

In a preferred embodiment of the open roof construction according to the present invention the movable guide part is connected to a lifting arm which is rotatable around a fixed rotation point. In such a construction, for moving the movable guide part in a direction substantially perpendicular to the roof panel it is sufficient to rotate said lifting arm.

Such a rotation of the lifting arm can be realised in many appropriate ways. Preferably, the rotatable lifting arm is provided with a projecting pin which is slidably received in a curved track of a movable operating member. Moving the operating member will cause the projecting pin to move in a defined manner along the curved track of the operating member. As a result, the lifting arm will rotate and the movable guide part is lifted.

Such an operating member may be slidable in an auxiliary guide extending substantially in parallel to the movable guide part. For lifting the movable guide part, it is sufficient to slide the operating member in its auxiliary guide.

When, in accordance with yet an other preferred embodiment, the curved track comprises a central section inclined relative to the auxiliary guide and two opposite end sections substantially in parallel to the auxiliary guide, the projecting pin of the lifting arm will be positioned in one of the opposite end sections when the movable guide part is in its fully lowered position or when the movable guide part is fully lifted. Thus, in such extreme positions the roof panel cannot generate forces acting on the drive mechanism.

When the movable guide part cooperates with a stationary vertically extending guide pin, the cooperation between said guide pin and the movable guide part will ensure a proper vertical motion of the guide part.

The engagement between the lifting arm and the movable guide part may be realised by a slot provided in the lifting arm and a pin connected to the movable guide part and engaging in said slot. Of course, such a slot also could be provided in the movable guide part, whereas the pin could be connected to the lifting arm. These solutions are equivalent to each other.

Most preferably, the movable guide part is connected to two lifting arms positioned at opposite ends of the movable guide part. As a result, symmetrical forces are acting on the movable guide part, thus preventing any misalignment or distortion thereof.

Further, the guide members of the movable roof panel may be adjustable, for example when each guide member comprises a guide pin which is rotatable relative to the roof panel and of which the center line and the axis of rotation are mutually off-set. As a result, a rotation of such a guide pin leads to an adjustment of the position of the roof panel relative to the guides.

The present invention is applicable to many different open roof constructions, but preferably an open roof construction of the type, wherein the roof opening comprises two roof openings separated by a central stationary roof section, and wherein the roof openings each are provided with a movable roof panel, both roof panels being movable between a position closing the respective roof openings and a position freeing said roof openings while being stacked one above the other above the central stationary roof section, wherein the movable guide parts of each roof panel are positioned near to and cooperate with the outer ends of its edge that faces the central stationary roof section.

More specifically, the invention may relate to an open roof construction, in which the roof openings comprise left and right roof openings separated by a longitudinally extending central stationary roof section, and wherein the respective roof panels are movable transversally.

In such a type of open roof construction often an extendable wind deflector is provided positioned at the leading end of the roof openings. In accordance with the present invention said wind deflector preferably is operatively connected to said movable guide parts for movement between a retracted position when said movable guide parts are in a lowermost position, and an extended position when said movable guide parts are in an uppermost position.

As a result, an operation of the wind deflector will occur automatically when the roof panels are moved towards the position in which they are stacked one above the other above the central stationary roof section.

The operative connection between said wind deflector and a movable guide part may be realised in many ways. Preferably, the operative connections between said wind deflector and said movable guide parts each are defined by a hinging pin defining a hinge axis in parallel to said movable guide parts.

When, in accordance with the above, the open roof construction comprises two roof openings, each with a movable roof panel, the movable guide parts of said two roof panels positioned at the same side of said roof panels may be combined into one single movable guide part. In such a case, the respective drive mechanisms should be synchronized.

Hereinafter the invention will be elucidated referring to the drawing, in which an embodiment of the open roof construction in accordance with the present invention is illustrated.
Figure 1 shows, in a perspective view, an embodiment of an open roof construction according to the present invention in a closed position;
figure 2 shows, in a corresponding manner, the open roof construction of figure 1 at the start of moving it towards an open position;
figure 3 shows, in a corresponding manner, the open roof construction of figure 1 in an open position;
figure 4 shows, on a larger scale, a detail of the open roof construction according to figure 1 with the movable guide part lowered;
figure 5 corresponds with figure 4, however with the wind deflector omitted;
figure 6 corresponds with figure 5, however with the movable guide part omitted;
figure 7 corresponds with figure 6, however with the rotatable linking arm omitted;
figure 8 corresponds with figure 7, however with the auxiliary guide omitted, and
figure 9 is a view corresponding to figure 5, however now with the movable guide part lifted.

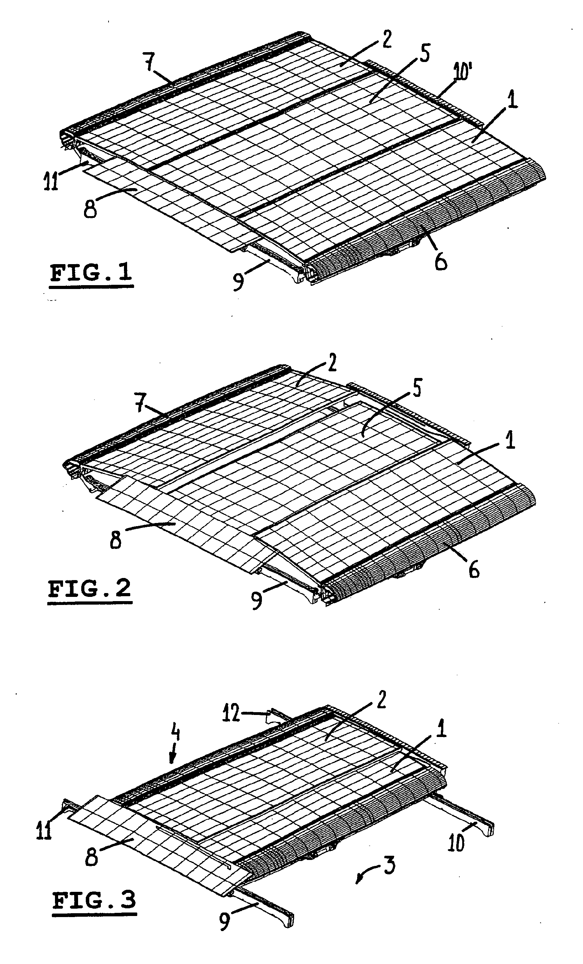

Firstly referring to figure 1, an open roof construction for provision in a vehicle is illustrated in a perspective view. The forward direction of said vehicle is assumed to extend forwardly to the left (as applies too for all remaining figures in this description). Basically, the illustrated open roof construction comprises a left movable roof panel 1 and a right movable roof panel 2. The left movable roof panel 1 is meant for opening and closing a left roof opening 3 (figure 3), whereas likewise the right movable roof panel 2 is meant for closing and opening a right roof opening 4 (figure 3). The left and right roof openings 3, 4 are provided in a stationary roof part of the vehicle, of which stationary roof part only a central stationary roof section 5 is illustrated separating the left and right roof openings 3, 4.

The left and right movable roof panels 1 and 2, the left and right roof openings 3 and 4 and the central stationary roof section 5 all extend longitudinally with respect to the vehicle.

In figure 1 the left and right movable roof panels 1, 2 close the respective left and right roof openings 3, 4. In figure 3, however, the left and right movable roof panels 1, 2 have been moved transversally towards each other to a position in which they are stacked one above the other above the central stationary roof section 5 (not visible in fig. 3).

At their longitudinal outer edges the left and right movable roof panels 1, 2 are provided with end members 6, 7 which in the closed position illustrated in fig. 1 engage or nearly engage adjacent parts of the vehicle, for example doors (not shown).

At the front of the illustrated open roof construction a movable wind deflector 8 is illustrated. In the position shown in fig. 1 the movable wind deflector 8 is in a retracted position in which it substantially coincides with the outer contour of the stationary roof of the vehicle. In the position shown in figure 3, however, the wind deflector 8 has been extended towards a position, in which it extends in an inclined manner upwardly and rearwardly. Thus, as is known per se, it may lead the air stream away from the roof openings 3 and 4 when the vehicle is moving.

For being movable between their position closing the respective left and right roof openings 3, 4 (figure 1) and a position freeing said roof openings (figure 3), the left and right movable roof panels 1, 2 cooperate with transversally extending guides 9-12. The present invention deals with slidably linking the outer end of the respective inner edges of the panels 1,2 facing towards the central stationary roof section 5 to the guides 9-12.

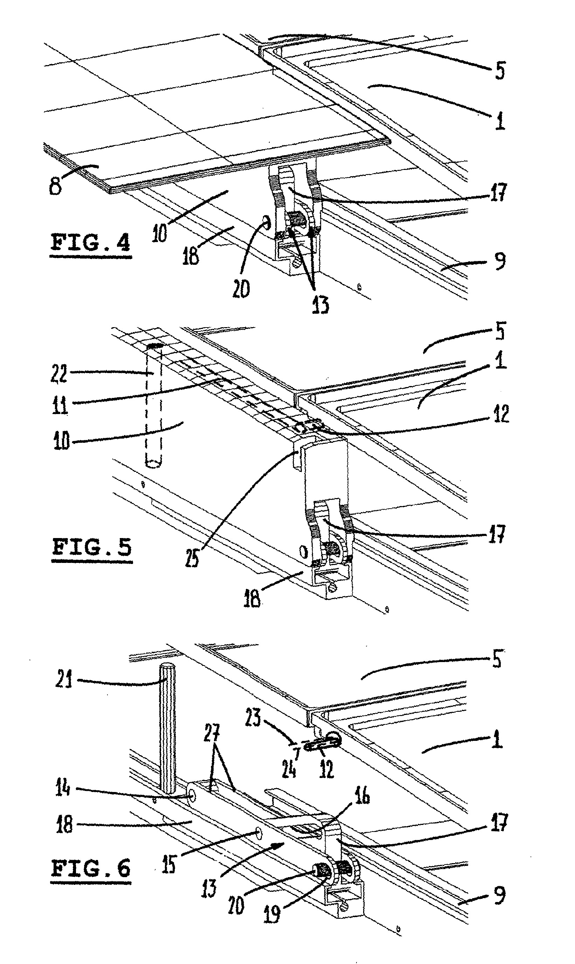

When the roof panels 1, 2 have to be moved from the position illustrated in figure 1 (in which they extend substantially in the same plane as the central stationary roof section 5) towards the position illustrated in figure 3 (in which they are positioned above the central stationary roof section 5) the inner edges of the panels 1,2 facing towards the central stationary roof section 5 firstly should be lifted. This is illustrated in figure 2. The figures 4-9 relate to a constructional solution for such a movement.

Figures 4-9 all relate to the same detail of the open roof construction in accordance with the present invention, that is the location where the left roof panel 1, at the outer end of its inner edge facing the central stationary roof section 5, is linked to the guide 9. Corresponding details will be present at the opposite outer end of said inner edge as well as at both outer ends of the inner edge of the right roof panel 2.

Firstly referring to fig. 4, the left roof panel 1, central stationary roof section 5, wind deflector 8 and guide 9 are partly illustrated. In a manner to be described later, the wind deflector 8 is hingeably connected to a movable guide part 10. As illustrated schematically in fig. 5 (in which figure the wind deflector 8 has been omitted) the movable guide part 10 comprises a guide channel 11 (illustrated in dotted lines) in which a guide pin 12 engages which is connected to the left roof panel 1.

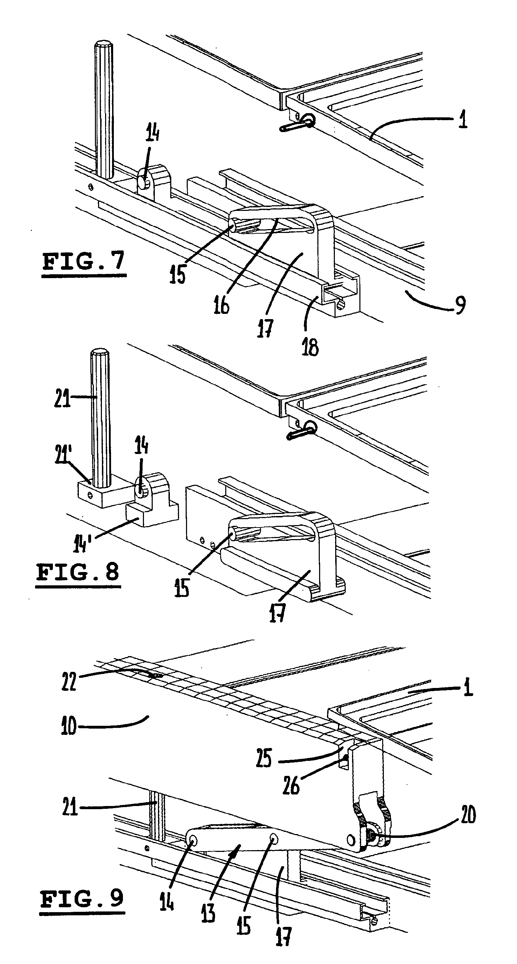

The movable guide part 10 is connected to a lifting arm 13, which is most clearly illustrated in fig. 6, in which the movable guide part 10 itself has been omitted. The lifting arm 13 is rotatable around a fixed rotation point 14 and is provided with a projecting pin 15 (best shown in figure 7 in which the remainder of the lifting arm 13 has been omitted) which is slidably received in a curved track 16 of a movable operating member 17.

The movable operating member 17 is slidable in an auxiliary guide 18 which extends substantially in parallel to the movable guide part 10 and substantially in parallel to the guide 9.

The end of the lifting arm 13 opposite the fixed rotation point 14 is provided with a slot 19 (see figure 6) in which a pin 20 engages that is connected to the movable guide part 10.

Further there is provided a stationary vertically extending guide pin 21 (see, for example, figure 6) which is received in a corresponding vertically extending channel 22 of the movable guide part 10 (figure 5), such that the movable guide part 10 only can move vertically with respect to the auxiliary guide 18.

In the illustrated embodiment the fixed rotation point 14 and guide pin 21 are firmly attached to the auxiliary guide 18. For this, they are provided with corresponding base members 14' and 21' (figure 8) which are received in the auxiliary guide 18 and which are fixed in a manner not shown in detail.

The illustrated open roof construction in accordance with the present invention operates as follows. For moving the roof panels 1 and 2 from the closed position illustrated in figure 1 towards the open position illustrated in figure 3, firstly the edges of the roof panels facing the central stationary roof section 5 are lifted. With respect to the previously described roof panel 1 this means that, starting from the position illustrated in figures 4-8, the operating member 17 will be moved in the auxiliary guide 18 (in those figures basically to the left). The resulting cooperation between the projecting pin 15 of the lifting arm 13 and the curved track 16 of the movable operating member 17 will cause a rotation of the lifting arm 13 around its fixed rotation point 14. As a result of this rotation of the lifting arm 13 its end opposite the fixed rotation point 14 (that is its end provided with the slot 19) will move upwards, thereby lifting the movable guide part 10. The movable guide part 10 will move vertically, due to the cooperation between its channel 22 and the fixed guide pin 21. To accommodate however the relative horizontal displacement between the outer end of the lifting arm 13 and the pin 20 attached to the movable guide part 10, slot 19 is wider than pin 20.

When the movable guide part 10 moves upwardly, the left roof panel 1 also moves upwardly due to the cooperation between the guide channel 11 of the movable guide part 10 and the guide pin 12 attached to the left roof panel 1. When the upward motion of the movable guide part 10 has been completed (such a situation is illustrated in figure 9) the left roof panel 1 can be slid with its guide pin 12 in the guide channel 11 to reach a position on top of the central stationary roof section 5.

For again closing the roof panel, a reversed operation may be used.

As is illustrated clearly in figures 7 and 8, the curved track 16 comprises a central section inclined relative to the auxiliary guide 18 and two opposite end sections substantially in parallel to the auxiliary guide 18. In the lowered position of the roof panel, the projecting pin 15 of the lifting arm 13 is housed in the lowermost of said end sections, and in the lifted position (according to fig. 9) it will be positioned in the uppermost of said end sections. When positioned in one of said end sections, a vertical force generated by the roof panel will not lead to a force which can move the movable operating member 17 relative to the auxiliary guide 18.

Preferably, the illustrated movable guide part 10 will also be used to lift the right roof panel 2. Furthermore, at the opposite sides (rearward sides) of said roof panels 1 and 2 a corresponding movable guide part 10'(see figures 1-3) will be provided. Thus, in such a configuration of the open roof construction in accordance with the present invention two movable guide parts will be provided, one (10) at the forward end of the roof panels and one (10') at the rearward end of the roof panels. In such a case, each movable guide part 10 then will cooperate with two operating members 17 which, however, move in an opposite sense and which are synchronised.

Referring to figure 6 it is illustrated, that the guide pin 12 can rotate around an axis of rotation 23 which is off-set relative to its center line 24. As a result, rotating said guide pin 12 can be used for adjusting the vertical position of the roof panel.

Figure 9 shows a recess 25 in the movable guide part 10, in which a hinging pin 26 is positioned. Said hinging pin 26 cooperates with a hinging lip (not illustrated) connected to the wind deflector 8, in such a manner that a vertical movement of the movable guide part 10 will lead to a corresponding vertical movement and rotation of the wind deflector 8 around the hinging pin 26.

It is noted, that in the illustrated embodiment the lifting arm 13 is comprised of two side plates 27 (figure 6), such that a symmetrical engagement of the movable guide part 10 can be realised.

The invention is not limited to the embodiment described before, which may be varied widely within the scope of the invention as defined by the appending claims.

## Claims

1. Open roof construction for a vehicle, comprising a movable roof panel (1,2) for opening and closing a roof opening (3,4) provided in a stationary roof part (5) of said vehicle, wherein at two opposite sides of said roof, opening guides (9-12) are provided in which guide members (12) are slidable linking the roof panel to the guides, **characterized in that** at least part (10) of each guide is movable in a direction substantially perpendicular to the roof panel.

2. Open roof construction according to claim 1, wherein the movable guide part (10) is connected to a lifting arm (13) which is rotatable around a fixed rotation point (14).

3. Open roof construction according to claim 2, wherein the rotatable lifting arm is provided with a projecting pin (15) which is slidably received in a curved track (16) of a movable operating member (17)

4. Open roof construction according to claim 3, wherein the operating member is slidable in an auxiliary guide (18) extending substantially in parallel to the movable guide part (10).

5. Open roof construction according to claim 3 or 4, wherein the curved track (16) comprises a central section inclined relative to the auxiliary guide (18) and two opposite end sections substantially in parallel to the auxiliary guide.

6. Open roof construction according to any of the claims 2-5, wherein the movable guide part (10) cooperates with a stationary vertically extending guide pin (21).

7. Open roof construction according to claim 6, wherein the lifting arm (13) comprises a slot (19) in which a pin (20) connected to the movable guide part (10) engages.

8. Open roof construction according to any of the claims 2-7, wherein the movable guide part (10) is connected to two lifting arms (13) positioned at opposite ends of the movable guide part.

9. Open roof construction according to any of the previous claims, wherein the guide members (12) of the movable roof panel are adjustable.

10. Open roof construction according to claim 9, wherein the guide members each comprise a guide pin (12) which is rotatable relative to the roof panel and of which the center line (24) and the axis of rotation (23) are mutually off-set.

11. Open roof construction according to any of the previous claims, wherein the roof opening comprises two roof openings (3,4) separated by a central stationary roof section (5), and wherein the roof openings each are provided with a movable roof panel (1,2) both roof panels being movable between a position closing the respective roof openings and a position freeing said roof openings while being stacked one above the other above the central stationary roof section, wherein the movable guide parts (10) of each roof panel are positioned near to and cooperate with the outer ends of its edge that faces the central stationary roof section.

12. Open roof construction according to claim 9, further provided with an extendable wind deflector (8) positioned at the leading end of the roof openings, wherein said wind deflector is operatively connected to said movable guide parts (10) for movement between a retracted position when said movable guide parts are in a lowermost position, and an extended position when said movable guide parts are in an uppermost position.

13. Open roof construction according to claim 11, wherein the operative connections between said wind deflector (8) and said movable guide parts (10) each are defined by a hinging pin (26) defining a hinge axis in parallel to said movable guide parts.

## Patentansprüche

1. Offendachkonstruktion für ein Fahrzeug, aufweisend ein bewegbares Dachpaneel (1, 2) zum öffnen und Schließen einer Dachöffnung (3, 4), die in einem stationären Dachteil (5) des Fahrzeugs vorgesehen ist, wobei an zwei entgegengesetzten Seiten des Daches Öffnungsführungen (9-12) vorgesehen sind, in denen Führungselemente (12) das Dachpaneel gleitend an die Führungen anschließen, **dadurch gekennzeichnet, dass** zumindest ein Teil (10) jeder Führung in einer zu dem Dachpaneel im Wesentlichen senkrechten Richtung bewegbar ist.

2. Offendachkonstruktion gemäß Anspruch 1, wobei der bewegbare Führungsteil (10) an einen Hebearm (13) angeschlossen ist, der um einen festen Drehpunkt (14) herum drehbar ist.

3. Offendachkonstruktion gemäß Anspruch 2, wobei der drehbare Hebearm mit einem hervorstehenden Stift (15) versehen ist, der gleitend in einer Kurvenbahn (16) eines bewegbaren Bedienelements (17) aufgenommen ist.

4. Offendachkonstruktion gemäß Anspruch 3, wobei das Bedienelement in einer Hilfsführung (18), die sich im Wesentlichen parallel zu dem bewegbaren Führungsteil (10) erstreckt, verschiebbar ist.

5. Offendachkonstruktion gemäß Anspruch 3 oder 4, wobei die Kurvenbahn (16) aufweiset: einen zentralen Abschnitt, der bezüglich der Hilfsführung (18) geneigt ist, und zwei entgegengesetzte Endabschnitte, die im Wesentlichen parallel zu der Hilfsführung sind.

6. Offendachkonstruktion gemäß einem der Ansprüche 2 bis 5, wobei der bewegbare Führungsteil (10) mit einem stationären, sich vertikal erstreckenden Führungsstift (21) zusammenwirkt.

7. Offendachkonstruktion gemäß Anspruch 6, wobei der Hebearm (13) einen Schlitz (19) aufweist, in den ein Stift, (20) eingreift, der an den bewegbaren Führungsteil (10) angeschlossen ist.

8. Offendachkonstruktion gemäß einem der Ansprüche 2 bis 7, wobei der bewegbare Führungsteil (10) an zwei Hebearme (13) angeschlossen ist, die an entgegengesetzten Enden des bewegbaren Führungsteils angeordnet sind.

9. Offendachkonstruktion gemäß einem der vorhergehenden Ansprüche, wobei die Führungselemente (12) des bewegbaren Dachpaneels verstellbar sind.

10. Offendachkonstruktion gemäß Anspruch 9, wobei die Führungselemente jeweils einen Führungsstift (12) aufweisen, der bezüglich des Dachpaneels drehbar ist, und zu dem die Mittellinie (24) und die Drehachse (23) gegenseitig versetzt sind.

11. Offendachkonstruktion gemäß einem der vorhergehenden Ansprüche, wobei die Dachöffnung zwei Dachöffnungen (3, 4) aufweist, die durch einen zentralen stationären Dachabschnitt (5) getrennt sind, und wobei die Dachöffnungen jeweils mit einem bewegbaren Dachpaneel (1, 2) versehen sind, wobei beide Dachpaneele bewegbar sind zwischen einer Position, die die jeweiligen Dachöffnungen verschließt, und einer Position, die die Dachöffnungen freigibt, während sie über dem zentralen stationären Dachabschnitt übereinander gestapelt sind, wobei die bewegbaren Führungsteile (10) jedes Dachpaneels in der Nähe von den äußeren Enden seines dem zentralen stationären Dachabschnitt zugewandten Randes positioniert sind und mit diesen zusammenwirken.

12. Offendachkonstruktion gemäß Anspruch 9, ferner einen ausfahrbaren Windabweiser (8) aufweisend, der an dem Führungsende der Dachöffnungen angeordnet ist, wobei der Windabweiser für eine Bewegung zwischen einer Einziehposition, wenn die bewegbaren Führungsteile in der niedrigsten Position sind, und einer Ausfahrposition, wenn die bewegbaren Führungsteile in einer höchsten Position sind, funktional an die bewegbaren Führungsteile (10) angeschlossen ist.

13. Offendachkonstruktion gemäß Anspruch 11, wobei die funktionalen Anschlüsse zwischen dem Windabweiser (8) und den bewegbaren Führungsteilen (10) jeweils durch einen Gelenkstift (26) definiert sind, der eine Gelenkachse parallel, zu den bewegbaren Führungsteilen definiert.

## Revendications

1. Structure de toit ouvrant pour un véhicule, comprenant un panneau de toit (1, 2) doué de mobilité, conçu pour dégager et occulter une ouverture (3, 4) pratiquée dans une partie fixe (5) du toit dudit véhicule, sachant que des guides (9-12), dans lesquels peuvent coulisser des pièces de guidage (12) articulant le panneau de toit sur lesdits guides, sont prévus sur deux côtés opposés de ladite ouverture du toit, **caractérisée par le fait qu'**au moins une partie (10) de chaque guide est mobiles dans une direction substantiellement perpendiculaire au panneau de toit.

2. Structure de toit ouvrant selon la revendication 1, dans laquelle la partie mobile (10) du guide est reliée à un bras de levage (13) pouvant tourner autour d'un point fixe de rotation (14).

3. Structure de toit ouvrant selon la revendication 2, dans laquelle le bras rotatif de levage est pourvu d'un tenon saillant (15) qui est logé, de manière coulissante, dans une piste curviligne (16) d'une pièce mobile d'actionnement (17).

4. Structure de toit ouvrant selon la revendication 3, dans laquelle la pièce d'actionnement peut coulisser dans un guide auxiliaire (18) s'étendant, en substance, parallèlement à la partie mobile (10) du guide.

5. Structure de toit ouvrant selon la revendication 3 ou 4, dans laquelle la piste curviligne (16) comprend une région central, inclinée par rapport au guide auxiliaire (18), et deux régions extrêmes opposées substantiellement parallèles audit guide auxiliaire.

6. Structure de toit ouvrant selon l'une quelconque des revendications 2-5, dans laquelle la partie mobile (10) du guide coopère avec une cheville fixe de guidage (21) s'étendant verticalement.

7. Structure de toit ouvrant selon la revendication 6, dans laquelle le bras de levage (13) comporte une fente (19), dans laquelle pénètre un tenon (20) relié à la partie mobile (10) du guide.

8. Structure de toit ouvrant selon l'une quelconque des revendications 2-7, dans laquelle la partie mobile (10) du guide est reliée à deux bras de levage (13), placés à des extrémités opposées de ladite partie mobile du guide.

9. Structure de toit ouvrant selon l'une quelconque des revendications précédentes, dans laquelle les pièces de guidage (12) du panneau de toit mobile peuvent être réglées.

10. Structure de toit ouvrant selon la revendication 9, dans laquelle chacune des pièces de guidage comprend un tenon de guidage (12) qui est apte à tourner vis à vis du panneau de toit, et dont la ligne médiane (24) et l'axe de rotation (23) sont mutuellement décalés.

11. Structure de toit ouvrant selon l'une quelconque des revendications précédentes, dans laquelle l'ouverture du toit comprend deux ouvertures (3, 4) de toit, séparées par une région centrale fixe (5) dudit toit ; et dans laquelle chacune desdites ouvertures de toit est munie d'un panneau de toit (1, 2) doué de mobilité, les deux panneaux de toit étant mobiles entre une position occultant les ouvertures de toit respectives, et une position dégageant lesdites ouvertures de toit lorsqu'ils sont agencés en superposition mutuelle, au-dessus de ladite région centrale fixe du toit, sachant que les parties mobiles (10) des guides de chaque panneau de toit sont disposées à proximité des extrémités extérieures de son bord qui pointe vers ladite région central fixe du toit, et coopèrent avec lesdites extrémités.

12. Structure de toit ouvrant selon la revendication 9, par ailleurs équipée d'un déflecteur déployable (8), placé à l'extrémité frontale des ouvertures de toit, ledit réflecteur étant en liaison opérante avec lesdites parties mobiles (10) des guides, en vue d'un mouvement entre une position rétractée, lorsque lesdites parties mobiles des guides occupent un emplacement inférieur extrême, et une position déployée lorsque lesdites parties mobiles des guides occupent un emplacement supérieur extrême.

13. Structure de toit ouvrant selon la revendication 11, dans laquelle chacune des liaisons opérantes, entre ledit déflecteur (8) et lesdites parties mobiles (10) des guides, est définie par une broche de charnière (26) matérialisant un axe d'articulation parallèle auxdites parties mobiles des guides.
